# FASCICULE DE BREVET EUROPEEN

(11) **EP 4 094 554 B1**
(45) Date de publication et mention de la délivrance du brevet: **27.11.2024**
(21) Numéro de dépôt: 22174994.8
(22) Date de dépôt: 24.05.2022
(51) Int. Cl.: A01B 49/06, A01B 59/06, A01C 7/20

(54) **ENSEMBLE COMPRENANT UN OUTIL AGRICOLE DE TRAVAIL DU SOL ET UN OUTIL AGRICOLE ADDITIONNEL**
BAUGRUPPE MIT LANDWIRTSCHAFTLICHEM BODENBEARBEITUNGSGERÄT UND ZUSÄTZLICHEM LANDWIRTSCHAFTLICHEN GERÄT
ASSEMBLY COMPRISING AN AGRICULTURAL SOIL-WORKING TOOL AND AN ADDITIONAL AGRICULTURAL TOOL

(30) Priorité: 26.05.2021 FR 2105456
(43) Date de publication de la demande: 30.11.2022
(73) Titulaire: Kuhn SAS, 67700 Saverne (FR); RAUCH Landmaschinenfabrik GmbH, 76547 Sinzheim (DE)
(72) Inventeur: SCHMITT, Guillaume, 67250 SURBOURG (FR); KLEIN, Frédéric, 67000 STRASBOURG (FR)
(74) Mandataire: Hager, Esther Evelyne

(56) Documents cités:
- EP-A1- 0 629 337
- EP-A1- 0 635 194
- EP-A1- 0 950 344
- EP-A1- 0 966 874
- EP-A1- 0 966 875
- EP-A1- 2 949 193

## Description

La présente invention concerne le domaine des ensembles comprenant un outil agricole de travail du sol et un outil agricole additionnel.

Dans le domaine du semis agricole, l'on connaît déjà des semoirs combinés ou combinés de semis, qui regroupent deux outils agricoles en un, à savoir un outil agricole de travail du sol ainsi qu'un semoir monté sur celui-ci. De manière connue, le semoir comprend généralement une barre de semis et une trémie. Cet ensemble est destiné à être attelé à l'arrière d'un tracteur.

De tels ensembles ont l'avantage de permettre de combiner deux travaux en un passage. En effet, lors d'un seul passage le sol est travaillé et ensemencé. Il en résulte avantageusement des économies de temps et de carburant, moins de compaction du sol car un seul passage de tracteur dans la parcelle est effectué, une optimisation de l'utilisation de la fenêtre de semis.

Ces semoirs combinés existent en de nombreuses variantes. L'outil agricole de travail du sol peut être dit animé, c'est le cas par exemple si celui-ci consiste en une herse rotative ou une fraise rotative. L'outil agricole de travail du sol peut être dit non-animé, c'est le cas par exemple si celui-ci consiste en un cultivateur à disques ou à dents.

Quant à lui, le semoir qui correspond dans ce cas à l'outil agricole additionnel peut être à distribution mécanique ou pneumatique. On entend par distribution la sélection, le dosage et le transport des graines de la trémie vers le sol.

Comme le divulgue notamment la publication EP2949193A1, le semoir est généralement monté sur l'outil agricole de travail du sol dans une position montée et peut être détaché de ce dernier dans une position démontée. Le semoir est donc démontable, ce qui est particulièrement avantageux dans le cas où seul l'outil agricole de travail du sol doit être utilisé.

L'outil agricole de travail du sol et l'outil agricole additionnel comprennent chacun des moyens de réglage de la profondeur de travail. Ces moyens de réglage permettent de faire varier la profondeur de travail de chaque outil agricole.

Sur les ensembles connus de l'art antérieur, la modification de la profondeur de travail de l'outil agricole de travail du sol entraîne la modification de la profondeur de travail de l'outil agricole additionnel. Or, l'utilisateur ne souhaite pas avoir à régler systématiquement la profondeur de travail de l'outil agricole additionnel, par exemple le semoir, lorsqu'il modifie le réglage de la profondeur de travail de l'outil agricole de travail du sol.

En outre, sur les ensembles connus de l'art antérieur et notamment de la publication EP2949193A1, l'accrochage de l'outil agricole additionnel se fait au moyen de crochets comportant deux rampes inclinées situées sur un châssis dédié de l'organe de référence qui se présente usuellement sous la forme d'un rouleau, dans le cas d'une herse rotative. L'outil agricole additionnel comprend quant à lui deux tourillons sur chacun des côtés gauche et droite qui sont chacun verrouillés dans leur crochet dans la position montée. Cette solution donne satisfaction, mais nécessite de disposer d'un outil agricole de travail du sol qui comprend un châssis situé sur l'organe de référence. Or, tous les outils agricoles de travail du sol n'en sont pas nécessairement équipés et il coûte cher à réaliser.

Un autre ensemble est présenté dans le document EP 0 629 337 A1.

La présente invention a pour but de pallier au moins l'un de ces inconvénients et vise au moins à proposer une solution permettant d'éviter que le réglage de la profondeur de travail dudit au moins un organe de travail du sol de l'outil agricole de travail du sol n'influe sur le réglage de la profondeur de travail de l'outil agricole additionnel.

A cet effet, l'invention concerne un ensemble
comprenant au moins :
un outil agricole de travail du sol comprenant un châssis, au moins un organe de travail monté mobile selon un mouvement comprenant au moins une translation selon une direction sensiblement perpendiculaire au sol sur ledit châssis par des premiers moyens de réglage de la profondeur de travail dudit au moins un organe de travail et un organe de référence monté pivotant relativement au châssis au moins aux moyens de deux bras latéraux et d'une paire de premières liaisons pivots,
un outil agricole additionnel,
ledit ensemble est caractérisé en ce que dans une position montée, ledit outil agricole additionnel est relié audit outil agricole de travail du sol par au moins une structure de liaison formant un quadrilatère déformable comportant :
   un premier segment situé entre la première liaison pivot et une deuxième liaison pivot reliant l'outil agricole additionnel au bras latéral de l'outil agricole de travail du sol,
   un deuxième segment parallèle et préférentiellement de longueur identique au premier segment, le deuxième segment étant situé entre une troisième liaison pivot reliant, directement ou indirectement, le châssis à un bras de liaison et une quatrième liaison pivot reliant le bras de liaison à l'outil agricole additionnel,
   de sorte que dans ladite position montée, l'orientation de l'outil agricole additionnel soit conservée si la profondeur de travail dudit au moins un organe de travail de l'outil agricole de travail du sol varie par l'intermédiaire des premiers moyens de réglage.

L'invention sera mieux comprise, grâce à la description ci-après, qui se rapporte à plusieurs modes de réalisation préférés, donnés à titre d'exemples non limitatifs, et expliqués avec référence aux dessins schématiques annexés, dans lesquels :
[Fig. 1] la figure 1 représente une vue en perspective de face d'un ensemble selon l'invention,
[Fig. 2] la figure 2 représente une vue en perspective de côté dudit ensemble selon l'invention,
[Fig. 3] la figure 3 représente une vue de côté dudit ensemble avec un outil agricole de travail du sol en position de profondeur de travail maximale,
[Fig. 4] la figure 4 représente une vue de côté dudit ensemble avec ledit outil agricole de travail du sol en position de profondeur de travail intermédiaire, et
[Fig. 5] la figure 5 représente une vue de côté dudit ensemble avec ledit outil agricole de travail du sol en position de profondeur de travail minimale.

Un ensemble comprend au moins :
un outil agricole de travail du sol 1 comprenant un châssis 2, au moins un organe de travail 3 monté mobile selon un mouvement comprenant au moins une translation selon une direction D1 sensiblement perpendiculaire au sol S sur ledit châssis 2 par des premiers moyens de réglage 4 de la profondeur de travail dudit au moins un organe de travail 3 et un organe de référence 5 monté pivotant relativement au châssis 2 au moins aux moyens de deux bras latéraux 6 et d'une paire de premières liaisons pivots A,
un outil agricole additionnel 7.

Conformément à l'invention, ledit ensemble est caractérisé en ce que dans une position montée PM, ledit outil agricole additionnel 7 est relié audit outil agricole de travail du sol 1 par au moins une structure de liaison 8 formant un quadrilatère déformable comportant :
un premier segment AB situé entre la première liaison pivot A et une deuxième liaison pivot B reliant l'outil agricole additionnel 7 au bras latéral 6 de l'outil agricole de travail du sol 1,
un deuxième segment parallèle CD et préférentiellement de longueur identique au premier segment AB, le deuxième segment CD étant situé entre une troisième liaison pivot C reliant, directement ou indirectement, le châssis 2 à un bras de liaison 9 et une quatrième liaison pivot D reliant le bras de liaison 9 à l'outil agricole additionnel 7,
de sorte que dans ladite position montée PM, l'orientation de l'outil agricole additionnel 7 soit conservée si la profondeur de travail dudit au moins un organe de travail 3 de l'outil agricole de travail du sol 1 varie par l'intermédiaire des premiers moyens de réglage 4.

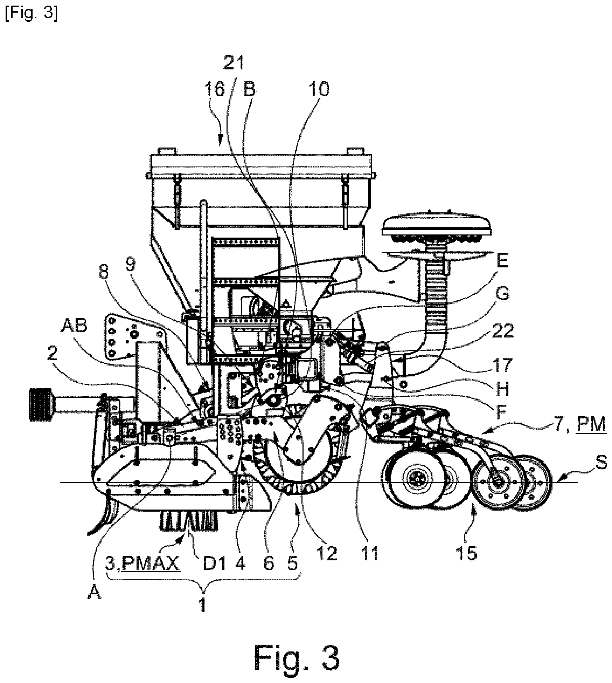

Avantageusement, le réglage de la profondeur de travail dudit au moins un organe de travail 3 de l'outil agricole de travail du sol 1 par les premiers moyens de réglage 4 n'influe pas sur le réglage de la profondeur de travail de l'outil agricole additionnel 7. Le réglage de la profondeur de travail de l'outil agricole additionnel 7 et le réglage de de la profondeur de travail dudit au moins un organe de travail 3 au sol S peuvent ainsi être totalement dissociés. Il en résulte que lorsque l'utilisateur modifie le réglage de la profondeur de travail dudit au moins un organe de travail 3 de l'outil agricole de travail du sol 1, il n'a pas besoin de régler la profondeur de travail de l'outil agricole additionnel 7, s'il souhaite que la profondeur de travail de l'outil agricole additionnel 7 reste constante. Ainsi, dans ce cas, seuls les premiers moyens de réglage 4 doivent être manipulés ou actionnés par l'utilisateur. En effet, grâce à la structure de liaison 8 formant un quadrilatère déformable, l'orientation de l'outil agricole additionnel 7 est conservée, même si la profondeur de travail dudit au moins un organe de travail 3 de l'outil agricole de travail du sol 1 est modifiée par l'intermédiaire des premiers moyens de réglage 4, comme l'illustrent les figures 3 à 5. On entend plus généralement par une structure de liaison 8 à quadrilatère déformable, une structure composée de quatre corps rigides articulés entre eux par des liaisons pivots. Il peut consister par exemple en un trapèze déformable ou un parallélogramme déformable.

On entend par « le deuxième segment CD étant situé entre une troisième liaison pivot C reliant, directement ou indirectement, le châssis 2 à un bras de liaison 9 », le fait que la liaison mécanique réalisée par la troisième liaison pivot C est une liaison directe entre le châssis 2 et le bras de liaison 9 ou une liaison indirecte entre le châssis 2 et le bras de liaison 9 par exemple via la trémie 16 et comme expliqué ci-après.

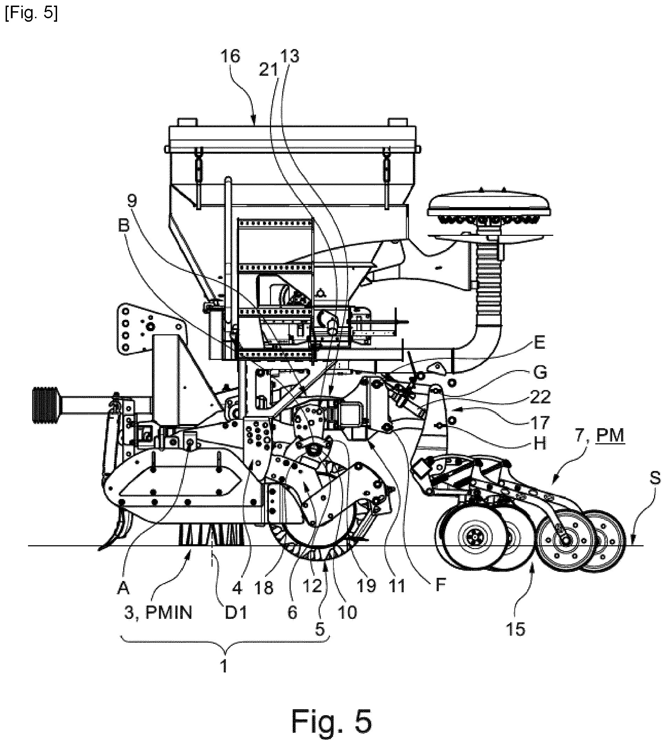

La profondeur de travail dudit au moins un organe de travail 3 de l'outil agricole de travail du sol 1 peut varier entre une position de profondeur de travail maximale PMAX (figure 3) et une position de profondeur de travail minimale (figure 5) grâce aux premiers moyens de réglage 4.

En effet, à la figure 3, ledit au moins un organe de travail 3 de l'outil agricole de travail du sol 1 est en position de profondeur de travail maximale PMAX et on observe que dans la position montée PM, l'outil agricole additionnel 7 est orienté sensiblement parallèlement au sol S.

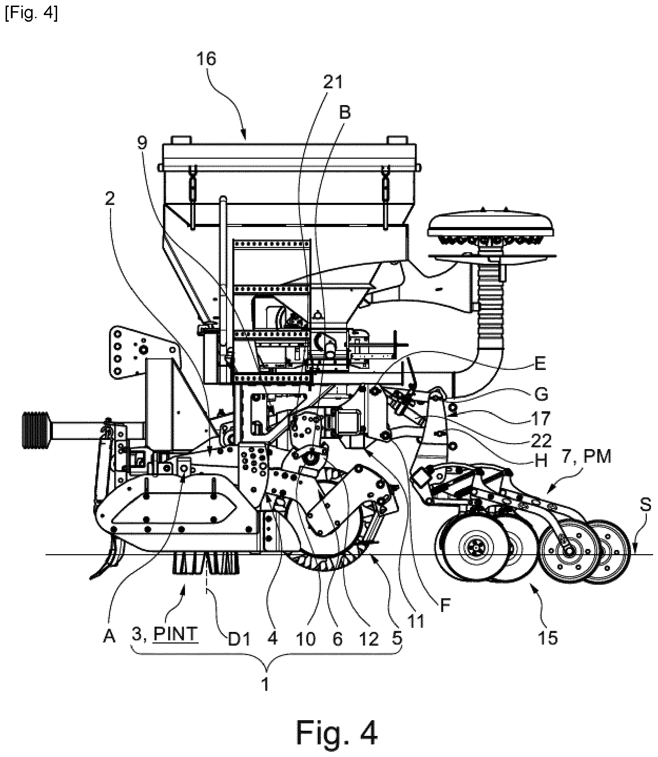

A la figure 4, ledit au moins un organe de travail 3 de l'outil agricole de travail du sol 1 est en position de profondeur de travail intermédiaire et on observe que dans la position montée PM, l'outil agricole additionnel 7 reste avantageusement orienté sensiblement parallèlement au sol S.

A la figure 5, ledit au moins un organe de travail 3 de l'outil agricole de travail du sol 1 est en position de profondeur de travail minimale et on observe que dans la position montée PM, l'outil agricole additionnel 7 reste avantageusement orienté sensiblement parallèlement au sol S.

Un autre avantage de cette configuration est que comme l'outil agricole additionnel 7 est relié à l'outil agricole de travail du sol 1 par la deuxième liaison pivot B au niveau du bras latéral 6, alors il n'est pas nécessaire d'ajouter un châssis dédié à l'organe de référence 5 pour accrocher l'outil agricole additionnel 7. En outre, la cinématique de l'organe de référence 5 et de l'outil agricole additionnel 7 sont chacune conservées.

L'outil agricole de travail du sol 1 permet d'effectuer une tâche de préparation du sol S. L'outil agricole de travail du sol 1 peut être dit animé, c'est le cas par exemple si celui-ci consiste en une herse rotative ou une fraise rotative. L'outil agricole de travail du sol 1 peut être dit non-animé, c'est le cas par exemple si celui-ci consiste en un cultivateur à disques ou à dents.

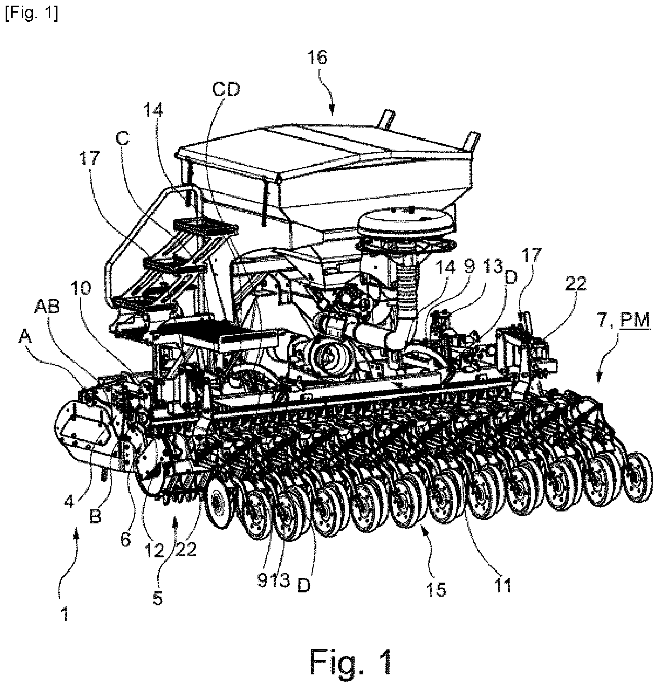

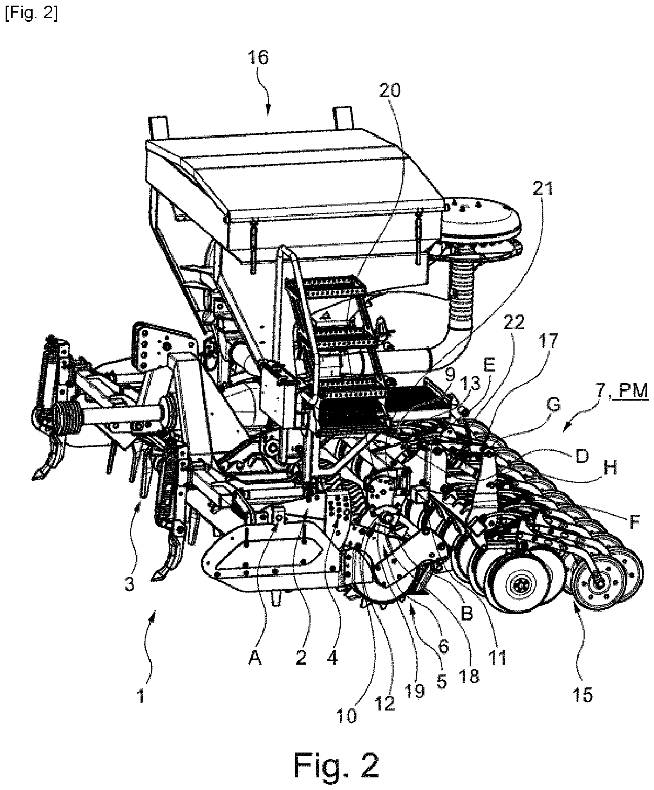

Dans l'exemple non limitatif représenté dans les figures 1 à 5, l'outil agricole de travail du sol 1 est une herse rotative. Les organes de travail 3 peuvent être animés par la prise de force d'un tracteur. Les organes de travail 3 peuvent comprendre des dents rotatives autour d'un axe vertical relativement au sol S. Les premiers moyens de réglage 4 de la profondeur de travail dudit au moins un organe de travail 3 permettent de faire varier la position en hauteur du segment AC. Ils consistent de préférence en un sélecteur à trous dans lequel viennent s'engager des ergots. D'autres exemples peuvent inclure des butées réglables, des actionneurs hydrauliques ou électriques, ou encore des systèmes à manivelles actionnables par l'opérateur. Ce réglage de profondeur de travail de l'outil agricole de travail du sol 1 peut être effectué directement sur la machine de manière manuelle mais peut aussi être effectué par l'opérateur depuis la cabine du tracteur, par exemple via un terminal de commande ou la commande des distributeurs hydrauliques, grâce notamment à un asservissement du/des actionneur(s). L'organe de référence 5 est dans ce cas un rouleau. Il permet d'appuyer sur le sol S et de contrôler la profondeur de travail. Ce rouleau peut se présenter sous différentes formes. Dans la variante représentée, il présente une série de dents sur l'ensemble de sa surface extérieure en contact avec le sol S, celles-ci permettent d'effectuer un travail de nivelage supplémentaire sur le sol S. Le rouleau peut également présenter des rainures, pouvant être cintrées de caoutchouc ou d'un matériau élastomère, qui permettent de créer des sillons, utilisés par la suite par le semoir. Le rouleau peut également aussi être réalisé sous forme d'un rouleau à tubes. Le choix du rouleau est réalisé selon les conditions du sol S à travailler et le type de travail souhaité.

L'outil agricole additionnel 7 permet de préférence d'effectuer une tâche de distribution d'au moins un produit et/ou d'au moins une semence. La distribution peut être mécanique ou pneumatique. On entend par distribution la sélection, le dosage et le transport des semences et/ou de produits de la trémie vers le sol S.

De préférence, la deuxième liaison pivot B et la troisième liaison pivot C sont démontables, de sorte que dans la position montée PM, respectivement la deuxième liaison pivot B et la troisième liaison pivot C sont dans un état assemblé et dans une position démontée, respectivement la deuxième liaison pivot B et la troisième liaison pivot C sont dans un état désassemblé.

Avantageusement, cette configuration permet respectivement un accrochage ou inversement un décrochage rapide de l'outil agricole additionnel 7 relativement à l'outil agricole de travail du sol 1. Pour ce faire, il suffit respectivement d'assembler ou de désassembler les deuxième et troisième liaisons pivots B et C. Il en résulte que dans la position montée PM, l'outil agricole additionnel 7 est relié au bras latéral 6 de l'outil agricole de travail du sol 1 et le bras de liaison 9 est relié au châssis 2 de l'outil agricole de travail du sol 1 et que dans la position démontée (non représentée), l'outil agricole additionnel 7 est démonté du bras latéral 6 de l'outil agricole de travail du sol 1 et le bras de liaison 9 est démonté du châssis 2 de l'outil agricole de travail du sol 1.

De préférence et comme l'illustrent les figures, la structure de liaison 8 comprend deux tiges 10 et une barre transversale 11, laquelle relie les deux tiges 10 l'une à l'autre, la barre transversale 11 étant solidaire de l'outil agricole additionnel 7. En outre, sur chaque bras latéral 6 est monté un support de tige 12 par rapport auquel ladite tige 10 est configurée pour être montée pivotante, de sorte à former la deuxième liaison pivot B.

La barre transversale 11 est de préférence un profilé par exemple de section carrée et qui est creux.

Chaque tige 10 et la barre transversale 11 s'étendent longitudinalement de préférence selon des directions longitudinales parallèles.

De préférence et comme l'illustrent les figures, dans la position montée PM, ladite tige 10 est engagée dans le support de tige 12, de sorte à former la deuxième liaison pivot B dans l'état assemblé. En outre, dans la position démontée, ladite tige 10 est désengagée du support de tige 12, de sorte à réaliser la deuxième liaison pivot B dans l'état désassemblé.

Le support de tige 12 peut comprendre une plaque munie d'une zone de réception 18 de la tige 10 de forme sensiblement circulaire ou demi-circulaire fermée par un crochet de verrouillage 19.

Le support de tige 12 s'étend de préférence dans un plan sensiblement perpendiculaire au plan de section de la barre transversale 11.

De préférence et comme l'illustrent les figures, ladite tige 10 est montée amovible relativement à ladite barre transversale 11, par exemple, au moyen d'un sélecteur à trous 20 dans lequel viennent s'engager des boulons de fixation 21.

Les différents perçages présents sur le sélecteur à trous 20 permettent d'insérer les boulons de fixation 21 selon différentes configurations et donc permettre un réglage additionnel de la position de la structure de liaison 8 par rapport à l'outil agricole de travail du sol 1. Ceci peut être intéressant pour adapter la position de la structure de liaison 8 à différents organes de références 5, qui peuvent présenter des constructions différentes, notamment des supports de tiges 12.

De préférence et comme l'illustrent les figures, ledit au moins un bras de liaison 9 comprend une première extrémité 13 reliée à la barre transversale 11 par la quatrième liaison pivot D et comprend une deuxième extrémité 14 reliée directement ou indirectement audit châssis 2 par la troisième liaison pivot C.

La troisième liaison pivot C est, par exemple, réalisée en insérant la deuxième extrémité 14 du bras de liaison 9 qui comprend des perçages (non représentés) dans un support de fixation (non représenté) prévu directement sur le châssis 2 ou indirectement sur la trémie 16. Une fois les perçages du bras de liaison 9 et du support de fixation alignés, un élément de fixation (non représenté) démontable, telle qu'une goupille ou un boulon, est inséré à travers les perçages afin de solidariser les deux éléments et ainsi créer la troisième liaison pivot C dans un état assemblé.

La structure de liaison 8 illustrée dans les figures comprend deux bras de liaison 9 parallèles entre eux.

Chaque bras de liaison 9 s'étend longitudinalement selon une direction perpendiculaire à la direction longitudinale de la barre transversale 11.

Le bras de liaison 9 peut présenter une forme incurvée.

L'outil agricole additionnel 7 peut consister en un semoir qui comprend une barre de semis 15 et une trémie 16.

La trémie 16 peut être installée à proximité de la barre de semis 15 à l'arrière du tracteur (non représenté) ou être déportée à l'avant de celui-ci. Dans l'exemple représenté dans les figures 1 à 5, l'outil agricole additionnel 7 est un semoir.

De préférence et comme l'illustrent les figures, la trémie 16 est montée sur le châssis 2 et la deuxième extrémité 14 du bras de liaison 9 est reliée directement à la trémie 16 par la troisième liaison pivot C.

Avantageusement, dans la position montée PM, la trémie 16 est montée directement sur le châssis 2 de l'outil agricole de travail du sol 1. La trémie 16 peut donc aussi être montée à l'arrière du tracteur (non représenté). La barre de semis 15, la trémie 16 et l'outil agricole de travail du sol 1 forment ainsi un ensemble compact dans la position montée PM.

De préférence, le semoir comprend des moyens de liaison (non représentés) configurés pour solidariser la barre de semis 15 et la trémie 16 au moins lors du passage de la position montée PM à la position démontée et inversement.

Avantageusement, les moyens de liaison facilitent le montage/démontage du semoir en une seule fois. Il suffit ainsi de solidariser la barre de semis 15 et la trémie 16 par l'intermédiaire des moyens de liaison et d'assembler/désassembler les deuxième et troisième liaisons pivot B et C.

Les moyens de liaison sont par exemple un tirant.

De préférence et selon un exemple alternatif non illustré, la deuxième extrémité 14 est reliée directement au châssis 2 par la troisième liaison pivot C.

Avantageusement, dans cette configuration alternative, la trémie 16 peut être déportée par exemple à l'avant du tracteur (non représentée). Elle n'est donc pas montée sur le châssis 2 de l'outil agricole de travail du sol 1.

Dans ce cas, la trémie 16 peut être reliée à la barre de semis 15 par un conduit de type tuyau qui permet le transport des semences.

De préférence et comme l'illustrent les figures, le semoir comprend des deuxièmes moyens de réglage 17 agencés pour régler la profondeur de travail de ladite barre de semis 15.

Avantageusement, la profondeur de travail de la barre semis 15 peut être réglée par les deuxièmes moyens de réglage 17 de façon indépendante. Les deuxièmes moyens de réglage 17 se présentent de préférence sous la forme d'un quadrilatère déformable additionnel.

De préférence, les moyens de réglage 17 sont solidaires d'une part de la barre transversale 11 et d'autre part de la barre de semis 15.

Par exemple comme l'illustrent les figures, la barre de semis 15 est reliée par deux quadrilatères déformables additionnels à la barre transversale 11. Le quadrilatère déformable additionnel s'étend dans un plan sensiblement perpendiculaire au plan de section de la barre transversale 11.

Ce quadrilatère déformable additionnel peut comprendre quatre liaisons pivots E, F, G, H.

Les deux liaisons pivots E, F relient la structure de liaison 8 respectivement au bras de segment EG et au bras de segment FH.

Les deux liaisons pivots G, H relient la barre de semis 15 respectivement au bras de segment EG et au bras de segment FH.

Le quadrilatère déformable additionnel est de préférence déformable à l'aide d'un vérin 22 disposé sur sa diagonale EH qui peut être manipulé manuellement à l'aide d'une manivelle ou automatiquement à l'aide d'un actionneur.

Avantageusement, la modification de la longueur de la diagonale EH permet la déformation du quadrilatère déformable additionnel et donc le réglage de la profondeur de travail de ladite barre de semis 15.

Bien entendu, l'invention n'est pas limitée aux modes de réalisation décrits et représentés aux dessins annexés. Des modifications restent possibles, notamment du point de vue de la constitution des divers éléments, sans sortir pour autant du domaine de protection de l'invention.

## Revendications

1. Ensemble comprenant au moins :
- un outil agricole de travail du sol (1) comprenant un châssis (2), au moins un organe de travail (3) monté mobile selon un mouvement comprenant au moins une translation selon une direction (D1) sensiblement perpendiculaire au sol (S) sur ledit châssis (2) par des premiers moyens de réglage (4) de la profondeur de travail dudit au moins un organe de travail (3) et un organe de référence (5) monté pivotant relativement au châssis (2) au moins aux moyens de deux bras latéraux (6) et d'une paire de premières liaisons pivots (A),
- un outil agricole additionnel (7),
ledit ensemble est **caractérisé en ce que** dans une position montée (PM), ledit outil agricole additionnel (7) est relié audit outil agricole de travail du sol (1) par au moins une structure de liaison (8) formant un quadrilatère déformable comportant :
- un premier segment (AB) situé entre la première liaison pivot (A) et une deuxième liaison pivot (B) reliant l'outil agricole additionnel (7) au bras latéral (6) de l'outil agricole de travail du sol (1),
- un deuxième segment parallèle (CD) et préférentiellement de longueur identique au premier segment (AB), le deuxième segment (CD) étant situé entre une troisième liaison pivot (C) reliant, directement ou indirectement, le châssis (2) à un bras de liaison (9) et une quatrième liaison pivot (D) reliant le bras de liaison (9) à l'outil agricole additionnel (7),
de sorte que dans ladite position montée (PM), l'orientation de l'outil agricole additionnel (7) soit conservée si la profondeur de travail dudit au moins un organe de travail (3) de l'outil agricole de travail du sol (1) varie par l'intermédiaire des premiers moyens de réglage (4).

2. Ensemble selon la revendication 1, **caractérisé en ce que** la deuxième liaison pivot (B) et la troisième liaison pivot (C) sont démontables, de sorte que dans la position montée (PM), respectivement la deuxième liaison pivot (B) et la troisième liaison pivot (C) sont dans un état assemblé et **en ce que** dans une position démontée, respectivement la deuxième liaison pivot (B) et la troisième liaison pivot (C) sont dans un état désassemblé.

3. Ensemble selon l'une quelconque des revendications 1 à 2, **caractérisé en ce que** la structure de liaison (8) comprend deux tiges (10) et une barre transversale (11), laquelle relie les deux tiges (10) l'une à l'autre, la barre transversale (11) étant solidaire de l'outil agricole additionnel (7) et **en ce que** sur chaque bras latéral (6) est monté un support de tige (12) par rapport auquel ladite tige (10) est configurée pour être montée pivotante, de sorte à former la deuxième liaison pivot (B).

4. Ensemble selon les revendications 2 et 3, **caractérisé en ce que** dans la position montée (PM), ladite tige (10) est engagée dans le support de tige (12), de sorte à former la deuxième liaison pivot (B) et **en ce que** dans la position démontée, ladite tige (10) est désengagée du support de tige (12).

5. Ensemble selon l'une quelconque des revendications 3 à 4, **caractérisé en ce que** ledit au moins un bras de liaison (9) comprend une première extrémité (13) reliée à la barre transversale (11) par la quatrième liaison pivot (D) et comprend une deuxième extrémité (14) reliée directement ou indirectement audit châssis (2) par la troisième liaison pivot (C).

6. Ensemble selon l'une quelconque des revendications 1 à 5, **caractérisé en ce que** ledit outil agricole additionnel (7) consiste en un semoir comprenant une barre de semis (15) et une trémie (16).

7. Ensemble selon les revendications 5 et 6, **caractérisé en ce que** la trémie (16) est montée sur le châssis (2) et **en ce que** la deuxième extrémité (14) du bras de liaison (9) est reliée directement à la trémie (16) par la troisième liaison pivot (C).

8. Ensemble selon la revendication 7, **caractérisé en ce que** le semoir comprend des moyens de liaison configurés pour solidariser la barre de semis (15) et la trémie (16) au moins lors du passage de la position montée (PM) à la position démontée et inversement.

9. Ensemble selon les revendications 5 et 6 **caractérisé en ce que** la deuxième extrémité (14) est reliée directement au châssis (2) par la troisième liaison pivot (C).

10. Ensemble selon l'une quelconque des revendications 6 à 9, **caractérisé en ce que** le semoir comprend des deuxièmes moyens de réglage (17) agencés pour régler la profondeur de travail de ladite barre de semis (15).

## Patentansprüche

1. Kombination mit mindestens:
- einem landwirtschaftlichen Bodenbearbeitungswerkzeug (1) mit einem Rahmen (2), mindestens einem Arbeitselement (3), das gemäß einer Bewegung, die mindestens eine Translation gemäß einer im Wesentlichen senkrecht zum Boden (S) verlaufenden Richtung (D1) umfasst auf dem Rahmen (2) durch erste Arbeitstiefeeinstellungsmittel (4) des mindestens einen Arbeitselements (3) beweglich montiert ist, und einem Bezugselement (5), das zumindest mittels zweier Seitenarme (6) und eines Paares erster Schwenkgelenkungen (A) relativ zum Rahmen (2) schwenkbar montiert ist,
- einem zusätzliches landwirtschaftlichen Werkzeug (7),
wobei die Kombination **dadurch gekennzeichnet ist, dass** in einer montierten Position (PM) das zusätzliche landwirtschaftliche Werkzeug (7) mit dem landwirtschaftlichen Bodenbearbeitungswerkzeug (1) durch mindestens eine Verbindungsstruktur (8) verbunden ist, die ein verformbares Viereck bildet, dass:
- ein erstes Segment (AB), das sich zwischen der ersten Schwenkgelenkung (A) und einer zweiten Schwenkgelenkung (B) befindet, die das zusätzliche landwirtschaftliche Werkzeug (7) mit dem Seitenarm (6) des landwirtschaftlichen Bodenbearbeitungswerkzeugs (1) verbindet,
- ein zweites Segment (CD), das parallel zu dem ersten Segment (AB) verläuft und vorzugsweise die gleiche Länge aufweist, wobei sich das zweite Segment (CD) zwischen einer dritten Schwenkgelenkung (C), die den Rahmen (2) direkt oder indirekt mit einem Verbindungsarm (9) verbindet, und einer vierten Schwenkgelenkung (D) befindet, die den Verbindungsarm (9) mit dem zusätzlichen landwirtschaftlichen Werkzeug (7) verbindet,
umfasst,
so dass in der montierten Position (PM) die Ausrichtung des zusätzlichen landwirtschaftlichen Werkzeugs (7) beibehalten wird, wenn die Arbeitstiefe des mindestens einen Arbeitselements (3) des landwirtschaftlichen Bodenbearbeitungswerkzeugs (1) über die ersten Einstellungsmittel (4) variiert wird.

2. Kombination nach Anspruch 1, **dadurch gekennzeichnet, dass** die zweite Schwenkgelenkung (B) und die dritte Schwenkgelenkung (C) zerlegbar sind, so dass in der montierten Position (PM) jeweils die zweite Schwenkgelenkung (B) und die dritte Schwenkgelenkung (C) in einem zusammengebauten Zustand sind und dadurch, dass in einer demontierten Position jeweils die zweite Schwenkgelenkung (B) und die dritte Schwenkgelenkung (C) in einem zerlegten Zustand sind.

3. Kombination nach irgendeinem der Ansprüche 1 bis 2, **dadurch gekennzeichnet, dass** die Verbindungsstruktur (8) zwei Stäbe (10) und einen Querbalken (11) umfasst, welcher die beiden Stäbe (10) miteinander verbindet, wobei der Querbalken (11) fest mit dem zusätzlichen landwirtschaftlichen Werkzeug (7) verbunden ist, und dadurch, dass an jedem Seitenarm (6) eine Stabstütze (12) angebracht ist, in Bezug auf welche der Stab (10) ausgestaltet ist, schwenkbar angebracht zu werden, um die zweite Schwenkgelenkung (B) zu bilden.

4. Kombination nach den Ansprüchen 2 und 3, **dadurch gekennzeichnet, dass** in der montierten Position (PM) der Stab (10) mit der Stabstütze (12) in Eingriff ist, so dass die zweite Schwenkgelenkung (B) gebildet wird, und dadurch, dass in der demontierten Position der Stab (10) von der Stabstütze (12) gelöst ist.

5. Kombination nach irgendeinem der Ansprüche 3 bis 4, **dadurch gekennzeichnet, dass** der mindestens eine Verbindungsarm (9) ein erstes Ende (13) umfasst, das über die vierte Schwenkgelenkung (D) mit dem Querbalken (11) verbunden ist, und ein zweites Ende (14), das direkt oder indirekt über die dritte Schwenkgelenkung (C) mit dem Rahmen (2) verbunden ist.

6. Kombination nach irgendeinem der Ansprüche 1 bis 5, **dadurch gekennzeichnet, dass** das zusätzliche landwirtschaftliche Werkzeug (7) aus einer Drillmaschine besteht, die eine Säschiene (15) und einen Trichter (16) umfasst.

7. Kombination nach den Ansprüchen 5 und 6, **dadurch gekennzeichnet, dass** der Trichter (16) auf dem Rahmen (2) montiert ist und dadurch, dass das zweite Ende (14) des Verbindungsarms (9) über die dritte Schwenkgelenkung (C) direkt mit dem Trichter (16) verbunden ist.

8. Kombination nach Anspruch 7, **dadurch gekennzeichnet, dass** die Drillmaschine Verbindungsmittel umfasst, die so ausgestaltet sind, dass sie die Säschiene (15) und den Trichter (16) zumindest während des Übergangs von der montierten Position (PM) in die demontierte Position und umgekehrt fest miteinander verbinden.

9. Kombination nach den Ansprüchen 5 und 6, **dadurch gekennzeichnet, dass** das zweite Ende (14) über die dritte Schwenkgelenkung (C) direkt mit dem Rahmen (2) verbunden ist.

10. Kombination nach irgendeinem der Ansprüche 6 bis 9, **dadurch gekennzeichnet, dass** die Drillmaschine zweite Einstellungsmittel (17) umfasst, die so angeordnet sind, dass sie die Arbeitstiefe der Säschiene (15) einstellen.j

## Claims

1. Combination comprising at least:
- an agricultural soil-working tool (1) comprising a chassis (2), at least one work element (3) mounted to move on the said chassis (2) in a movement comprising at least a translation along a direction (D1) substantially perpendicular to the soil (S) by first working depth adjustment means (4) of the said at least one work element (3), and a reference element (5) mounted to pivot relative to the chassis (2) at least by means of two side arms (6) and a pair of first pivot connections (A),
- an additional agricultural tool (7),
the said combination is **characterized in that**, in a mounted position (PM), the said additional agricultural tool (7) is connected to the said agricultural soil-working tool (1) by at least one connecting structure (8) forming a deformable quadrilateral comprising:
- a first segment (AB) located between the first pivot connection (A) and a second pivot connection (B) connecting the additional agricultural tool (7) to the side arm (6) of the agricultural soil-working tool (1),
- a second segment (CD), preferably parallel to and of the same length as the first segment (AB), the second segment (CD) being located between a third pivot connection (C), directly or indirectly connecting the chassis (2) to a connecting arm (9), and a fourth pivot connection (D) connecting the connecting arm (9) to the additional agricultural tool (7),
so that in the said mounted position (PM), the orientation of the additional agricultural tool (7) is maintained if the working depth of the said at least one work element (3) of the agricultural soil-working tool (1) varies via the first adjustment means (4).

2. Combination according to claim 1, **characterized in that** the second pivot connection (B) and the third pivot connection (C) can be dismantled, so that in the mounted position (PM), respectively the second pivot connection (B) and the third pivot connection (C) are assembled and **in that** in a dismantled position, respectively the second pivot connection (B) and the third pivot connection (C) are disassembled.

3. Combination according to any of claims 1 to 2, **characterized in that** the connecting structure (8) comprises two rods (10) and a crossbar (11), which connects the two rods (10) to each other, the crossbar (11) being rigidly fastened to the additional agricultural tool (7), and **in that** on each side arm (6), a rod support (12) is mounted, relative to which the said rod (10) is configured to be mounted to pivot, so as to form the second pivot connection (B).

4. Combination according to claims 2 and 3, **characterized in that** in the mounted position (PM), the said rod (10) is engaged in the rod support (12), so as to form the second pivot connection (B), and **in that** in the dismantled position, the said rod (10) is disengaged from the rod support (12).

5. Combination according to any of claims 3 to 4, **characterized in that** the said at least one connecting arm (9) comprises a first end (13) connected to the crossbar (11) by the fourth pivot connection (D) and comprises a second end (14) connected directly or indirectly to the said chassis (2) by the third pivot connection (C).

6. Combination according to any of claims 1 to 5, **characterized in that** the said additional agricultural tool (7) consists of a seed-drill comprising a seedbar (15) and a hopper (16).

7. Combination according to claims 5 and 6, **characterized in that** the hopper (16) is mounted on the chassis (2) and **in that** the second end (14) of the connecting arm (9) is connected directly to the hopper (16) by the third pivot connection (C).

8. Combination according to claim 7, **characterized in that** the seed-drill comprises connection means configured to rigidly fasten the seedbar (15) and the hopper (16) together, at least when moving from the mounted position (PM) to the dismantled position and vice versa.

9. Combination according to claims 5 and 6, **characterized in that** the second end (14) is connected directly to the chassis (2) by the third pivot connection (C).

10. Combination according to any of claims 6 to 9, **characterized in that** the seed-drill comprises second means of adjustment (17) arranged to adjust the working depth of the said seedbar (15).
